# EUROPÄISCHE PATENTSCHRIFT

(11) **EP 0 500 838 B1**
(45) Veröffentlichungstag und Bekanntmachung des Hinweises auf die Patenterteilung: **08.11.1995**
(21) Anmeldenummer: 91914765.2
(22) Anmeldetag: 14.08.1991
(51) Int. Cl.: B01D 53/34, F23J 15/00

(54) **VERFAHREN UND VORRICHTUNG ZUR VERBESSERUNG DER WÄRMEAUSNUTZUNG VON STAUB- ODER ASCHEHALTIGEN VERBRENNUNGSABGASEN**
PROCESS AND DEVICE FOR IMPROVING THE UTILIZATION OF HEAT FROM COMBUSTION WASTE GASES CONTAINING DUST OR ASH
PROCEDE ET DISPOSITIF D'AMELIORATION DE L'UTILISATION DE LA CHALEUR DEGAGEE PAR DES GAZ DE COMBUSTION CONTENANT DES POUSSIERES OU DES CENDRES

(30) Priorität: 17.08.1990 EP 90115773; 06.06.1991 EP 91109289
(43) Veröffentlichungstag der Anmeldung: 02.09.1992
(73) Patentinhaber: Schoppe, Fritz, Dr.-Ing., D-82538 Geretsried (DE)
(72) Erfinder: SCHOPPE, Fritz, Dr.-Ing., D-8192 Geretsried 2 (DE); PRÖSTLER, Josef, Dipl.-Ing., D-8192 Geretsried 1 (DE)
(74) Vertreter: Körner, Ekkehard, Dipl.-Ing.
(86) Internationale Anmeldenummer: EP9101549
(87) Internationale Veröffentlichungsnummer: WO9203212

(56) Entgegenhaltungen:
- WO-A-85/02453
- DE-A- 3 339 111
- DE-A- 3 425 070
- DE-A- 3 700 553
- DE-B- 2 729 476

## Beschreibung

Die vorliegende Erfindung betrifft ein Verfahren sowie eine Vorrichtung zur Ausführung des Verfahrens zur Verbesserung der Wärmeausnutzung staubhaltiger Abgase, insbesondere aschehaltiger Abgase aus der Verbrennung von Kohlenstaub.

Der Ausnutzung des Wärmeinhaltes solcher Abgase beispielsweise in Kesseln sind in bekannter Weise Grenzen gesetzt durch Kondensationserscheinungen der Verbrennungsprodukte. Bekannt sind Korrosionen durch Taupunktsunterschreitungen von HCl, SO₃ und anderen korrodierenden Stoffen. Aber auch die Unterschreitung des Wassertaupunktes setzt bei solchen Abgasen eine Grenze, weil das kondensierende Verbrennungswasser staubförmige Stoffe einbindet, was zur Bildung von Schlamm, Verkrustungen etc. führt.

Bei staubfreien Abgasen ist eine Verbesserung der Wärmeausnutzung durch Unterschreitung insbesondere des Wassertaupunktes bekannt. Das kondensierte, meist sauere Verbrennungswasser kann flüssig abgeleitet werden. Eine Wärmeausnutzung bis unter den ursprünglichen Taupunkt konnte damit erreicht werden.

Bei staubhaltigen Abgasen, beispielsweise den Abgasen einer Kohlenstaubfeuerung, war dies bislang nicht möglich aus den oben genannten Gründen der Verschlammung; der Verkrustung und der meist damit einhergehenden Korrosion durch die genannten Schadstoffe.

Der Erfindung liegt die Aufgabe zugrunde, ein Verfahren zur Verbesserung der Wärmeausnutzung von staub- oder aschehaltigen Verbrennungsabgasen anzugeben, bei dem keine Gefahr einer Verschlammung, Verkrustung oder dgl. der Brennkammer oder seiner Abzüge besteht, in der der Verbrennungsvorgang und die Abgaskühlung ausgeführt werden.

Diese Aufgabe wird durch die Merkmale des Anspruchs 1 gelöst. Vorteilhafte Ausgestaltungen der Erfindung und eine Vorrichtung zur Durchführung des Verfahrens sind Gegenstand der Unteransprüche.

Bei dem erfindungsgemäßen Verfahren werden die in den Abgasen enthaltenen staubförmigen Stoffe einer vorbestimmten Wärmebehandlung unterzogen und dann auf eine relativ niedrige Temperatur abgekühlt, wobei die Zeit zwischen der Wärmebehandlung und der Abkühlung möglichst kurz seine soll, wie in den Ansprüchen definiert.

Durch das erfindungsgemäße Verfahren wird erreicht, daß Verbrennungswasser sowie die genannten korrodierenden Schadstoffe chemisch in Kristalle eingebunden werden, die sich aus dem genannten Staub beziehungsweise der Asche bilden. Auch nach Unterschreiten des ursprünglichen Säure- oder Wassertaupunktes bleibt der so entstehende Staub trocken und pulverförmig und korrodiert die Wärmeübertragungsflächen nicht mehr oder nur noch in stark verringertem Maße. Insbesondere bleiben diese Flächen trocken, da keine Flüssigkeitskondensation mehr auftritt. Somit entfällt auch die Bildung von Schlamm und Verkrustungen. Dadurch wird eine Ausnutzung der in den Verbrennungsabgasen enthaltenen Wärme bis herab unter die bisherigen Säure- oder Wassertaupunkte möglich.

Die wirtschaftliche Auswirkung des erfindungsgemäßen Verfahren ist erheblich. Die Absenkung der Abgastemperatur beispielsweise einer Kesselfeuerung von 130° C auf 45° C verbessert die Wärmeausnutzung der Abgase um ca. 4 %. Die in diesem Temperaturbereich anfallende Wärme kann beispielsweise genutzt werden zur Luftvorwärmung oder zur Erzeugung von Warmwasser.

Bei der Ausführung des Verfahrens spielen die einzelnen chemischen Bestandteile des in den Verbrennungsabgasen enthaltenen Staubes eine erfindungswesentliche Rolle, weil diese insbesondere mit dem CO₂ der Verbrennung Karbonate bilden, welche in bekannter Weise Kristallwasser einbinden. Wenn in den Verbrennungsabgasen andere gasförmige Stoffe enthalten sind, die zu einzelnen Komponenten des Staubes eine größere Affinität als CO₂ haben, beispielsweise HCl, SO₂ oder SO₃, so bilden sich entsprechend Kristalle von Chloriden, Sulfiten, Sulfaten etc., welche relativ große Mengen von Kristallwasser chemisch so einbinden können, daß das entstehende Kristall äußerlich trocken und nicht mehr korrosiv ist.

Besonders wirksam im erfindungsgemäßen Sinne sind die folgenden chemischen Komponenten des in den Abgasen enthaltenden Staubes: Ca, Mg, Alkalien, Fe usw. Alle diese Stoffe können Karbonate, Sulfate, Chloride etc. mit hohen Kristallwassergehalten bilden. Wenig wirksam im erfindungsgemäßen Sinne sind Elemente wie Si. Dieses bildet beispielsweise am Ende der Verbrennung SiO₂ oder Silikate, die hinsichtlich der oben genannten Reaktionen weitgehend inert sind.

Ein besonders häufiger Anwendungsfall des erfindungsgemäßen Verfahrens ist die Verbrennung von Kohle, insbesondere in Form der Kohlenstaubfeuerung. In fast allen Kohlesorten sind die oben genannten chemischen Komponenten in unterschiedlichem Maße enthalten.

Das erfindungsgemäße Verfahren ist jedoch auch anwendbar auf zunächst aschefreie Brennstoffe, denen während oder kurz nach der Verbrennung eine oder mehrere der vorgenannten wirksamen Komponenten zugemischt werden.

Das erfindungsgemäße Verfahren zur Erzielung des beschriebenen Ergebnisses besteht im wesentlichen aus zwei Schritten:
- Überführung einer hinreichenden Menge der vorgenannten chemischen Komponenten des Staubes in eine solche Form, daß diese bei der anschließenden Abkühlung Kristallwasser und korrodierende Komponente aufnehmen können,
- danach zügige Abkühlung der Abgase mitsamt einer hinreichenden Menge des Staubes auf eine Temperatur von unter 100° C, bevorzugt auf eine Temperatur von weniger als 30° C über dem ursprünglichen Wassertaupunkt.

Unter ursprünglichem Wassertaupunkt soll dabei derjenige Taupunkt verstanden werden, der sich aus dem Wasserdampfgehalt der Verbrennungsabgase ohne die erfindungsgemäße Kristallwassereinbindung ergibt.

Unter einer hinreichenden Menge im Sinne dieser Erfindung ist diejenige Menge zu verstehen, die sich aus den bekannten Reaktionen zur Einbindung der korrodierenden Stoffe und der gewünschten Kristallwassermenge ergibt, etwa aus den Reaktionen von CaCl₂ x ₂H₂O oder FeSO₄ x ₇H₂O.

Um die genannten chemischen Komponenten des Staubes in eine für korrodierende Stoffe und Kristallwasser aufnahmefähige Form zu bringen, sind zwei Maßnahmen erforderlich:
- Herauslösung dieser Komponenten aus den Gleichgewichtsverbindungen, in denen diese üblicherweise vorliegen,
- Aktivierung dieser Stäube, um eine hinreichend schnelle Einbindung von korrodierenden Komponenten und Wasser zu erhalten.

Die im Sinne der Erfindung besonders aktiven chemischen Komponenten des Staubes wie Ca. Mg oder die Alkalien liegen überwiegend als Karbonate, Chloride etc. vor. Diese zersetzen sich beim Erhitzen in bekannter Weise in Oxyde und gasförmige Komponenten. Die Zersetzungstemperaturen sind bekannt. Sie betragen bei Atmosphärendruck beispielsweise bei CaCO₃ 880° C, bei NaCl 800° C.

Um eine hinreichend schnelle Zersetzung zu erhalten, sollen diese Temperaturen um wenigstens 30° C, bevorzugt 50 - 100° C überschritten werden.

Eine obere Grenze ist dadurch gegeben, daß bei Überschreiten derselben einzelne Komponenten oder auch Verunreinigungen derselben zu schmelzen oder zu sintern beginnen, wodurch die davon betroffenen Teilchen beim nachfolgenden Abkühlen ihre Wirksamkeit verlieren. Diese Erscheinungen sind bekannt; beispielsweise spricht man beim Brennen von Kalk dann vom "Totbrennen" desselben. Je nach Verunreinigung tritt dies bei Überschreiten von 1100 - 1150° C ein.

Sofern in den abzukühlenden Abgasen keine hinreichenden Mengen aktiver chemischer Komponenten enthalten sind, können diese erfindungsgemäß vor oder kurz nach der Verbrennung dem Brennstoff beziehungsweise den Flammgasen zugemischt werden. Aus Kostengründen wird man hierzu meist Ca-Verbindungen verwenden, bespielsweise CaCO₃, CaO oder Ca(OH)₂. Bei letzterem beträgt die vorgenannte Zersetzungstemperatur zwar nur 510° C, was zum ersten Auftreten des erfindungsgemäßen Effektes ausreicht. Besonders wirksam wird das dabei entstehende CaO jedoch erst dann, wenn es kurzzeitig auf mehr als 880° C erhitzt worden ist.

Bei Sulfaten liegen die Zersetzungstemperaturen höher, beispielsweise bei CaSO₄ 1170° C. Hier ist es nicht immer möglich, eine weitgehende Zersetzung zu erreichen, ohne die Gefahr des Totbrennens zu laufen.

Für die Aktivierung des Staubes ist es weiterhin erforderlich, daß die Aufheizung in weniger als 0,5 s erfolgt, bevorzugt in weniger als 0,3 s. Die Aufheizungszeit zählt dabei von demjenigen Augenblick an, in dem Oberflächenfeuchtigkeit verdampft ist, was meist bei 90 - 130° C erfolgt, und von dem an der eigentliche Aufheizvorgang bis auf die Zersetzungstemperatur erfolgt.

Ähnliche Zeiten spielen eine Rolle bei eventueller Überschreitung der vorgenannten Totbrenntemperatur. Es wurde beobachtet, daß die chemische Aktivität der so erzeugten chemischen Komponente des Staubes dann nicht wesentlich geschädigt wird, wenn die Totbrenntemperatur nicht länger als 0,2 s. überschritten wird. Eine genaue Grenze konnte noch nicht ermittelt werden. Jedoch wurde beobachtet, daß bei Verweilzeiten von mehr als 1 s oberhalb der Totbrenntemperatur eine deutliche Verringerung der Wirkung der betreffenden chemischen Komponente des Staubes eintritt.

Nach der Freisetzung und Aktivierung der betreffenden chemischen Komponente des Staubes müssen die Staubteilchen so rasch als möglich auf die genannte Temperatur unterhalb 100° C abgekühlt werden. Dabei ist die Ausnutzung der genannten aktiven chemischen Elemente des Staubes dann besonders günstig, wenn die vorgenannte Zersetzungstemperatur jeder Komponente in weniger als 1 s, bevorzugt weniger als 0,6 s unterschritten wird, und wenn der Bereich der nachstehend definierten Einbindungstemperturen (unter 100° C) in weniger als 5 sec. erreicht wird. Je länger die Zeit vom Unterschreiten der Zersetzungstemperatur bis zum Unterschreiten der Einbindungstemperatur dauert, desto mehr nimmt die Wirksamkeit der jeweiligen chemischen Komponente des Staubes ab. Würde man beispielsweise den Staub oberhalb 100° C aus den Verbrennungsabgasen abtrennen, in einem Silo lagern, abkühlen lassen und dann warmen Verbrennungsgasen wieder zuführen, so tritt nur noch ein Bruchteil der Wirkung ein, auch wenn die Staubteilchen unter den Säure- oder den Wassertaupunkt der Abgase abgekühlt sind und durch Vermischen mit denselben an ihrer Oberfläche Kondensationseffekte erzeugen.

Besonders wirksam sind die genannten chemischen Komponenten des Staubes dann, wenn die Abgase unmittelbar nach Verlassen des Feuerraumes beispielsweise in üblicher Weise die Fauchgaszüge des Kessels sowie sonstige Wärmetauscherzüge ohne Verzug und mit möglichst kurzem zwischengeschalteten Rohrleitungsstücken durchlaufen.

Weiter ist es günstig, wenn während des Abkühlvorganges voll ausgebildete turbulente Strömung herrscht, die für einen intensiven Wärme- und Stoffaustausch sorgt. Die damit verbundenen hohen Druckabfälle der Verbrennungsabgasströmung und die daraus resultierenden kurzen Verweilzeiten sind für das erfindungsgemäße Verfahren günstig. Ungünstig sind große Querschnitte mit geringe Geschwindigkeiten, in denen dann Zähigkeitswirkungen vorherrschen können.

Die Annäherung an die genannte Grenze von ca. 100° C ist schon rein äußerlich daran zu erkennen, daß die Stäube sich zu verfärben beginnen. Dies ist besonders dann der Fall, wenn die aktiven Komponenten Ca, Mg und Fe enthalten. So wurde bespielsweise beobachtet, daß die zunächst ockerfarbene Asche einer Braunkohlenstaubfeuerung sich bei Annäherung an 100° C zunehmend oliv-, dann grün verfärbte. Dies ist ein äußeres Anzeichen für die beginnenden Einbindungsvorgänge.

Bei Annäherung an 100° C beginnt die Einbindung von Wasser und korrosiven Komponenten in den Staub. Die korrosiven Komponenten werden dabei umso schneller und umso eher eingebunden, je höher ihre chemische Aktivität zu der jeweiligen chemischen Komponenten des Staubes ist. Komponente hoher Affinität wie HCl, SO₂ oder SO₃ werden am raschesten und praktisch vollständig eingebunden. Komponente geringerer Affinität wie CO₂ reagieren langsamer und später. Man hat somit neben der Einbindung des H₂O auch eine wirksame und vollständige Einbindung der genannten korrodierenden Komponenten, was für praktische Ausführung des Verfahrens wesentlich ist.

Ebenso tritt ein weiterer Effekt auf, der die praktische Anwendung des Verfahrens erleichert. In den meisten Kohlenstaubsorten ist nämlich ein geringer Prozentsatz von Überkorn vorhanden, dessen Verbrennungszeiten höher als die genannten Verweil- und Abkühlungszeiten sind. Meist beträgt die Ausbrennzeit solchen Überkorns 2 bis 4 s. Solche Verweilzeiten sind in Heizkesselanlagen oder mittleren gewerblichen Dampfkesselanlagen nicht vorhanden. Die Überkornteilchen geraten daher im brennenden Zustand in das nachgeschaltete Staubfilter, wo sie zu Brandschäden führen können. Das erfindungsgemäße Verfahren bringt diese Überkornteilchen zum Erlöschen und verhindert damit Schäden des nachgeschalteten Abgasfilters.

Für die Wirksamkeit des Verfahrens ist es weiterhin wesentlich, einen möglichst großen Teil des Staubes gemeinsam mit dem Abgas abzukühlen und den Staub erst dann vom Abgas zu trennen, wenn die nachbeschriebene Einbindungstemperatur erreicht ist.

Dabei ist die Einbindungstemperatur in ihrem Verhältnis zur ursprünglichen Taupunktstemperatur zu sehen, die sich aus dem Verbrennungswasserdampf sowie der Feuchte von Brennstoff und Luft ergibt. Sie beträgt bespielsweise für west- und ostdeutschen Braunkohlenstaub je nach Luftüberschuß 35 - 42° C und kann bei den üblichen Zusätzen beispielsweise von Ca(OH)₂ noch 4 - 6° C höher steigen.

Wenn man bei Abkühlen der Rauchgase mitsamt dem darin enthaltendenen Staub 100° C unterschreitet, hat beispielsweise die Asche der vorgenannten beiden Kohlesorten bereits 1 % H₂O sowie kleine Mengen korrosiver Komponenten des Abgases eingebunden. Bei Taupunktsabstand von diesen 100° C bis zu der urspünglichen Taupunktstemperatur von beispielsweise 35° C beträgt somit 65° C.

Nähert man sich bei weiterem Abkühlen dem ursprünglichen Taupunkt bis auf etwa 15 - 17° C, sind die korrosiven Komponenten des Abgases (HCl, SO₃, SO₂ usw.) im Rahmen der Meßgenauigkeit vollstandig eingebunden. Damit stehen der weiteren Abkühlung der Rauchgase keine diesbezüglichen Hindernisse mehr im Weg.

Je weiter die Abgase dann abgekühlt werden, desto mehr H₂O wird eingebunden, und desto weiter sinkt der tatsächliche Taupunkt der Verbrennungsabgase. Bei einer Abgastemperatur von 45° C sinkt der Taupunkt dann auf ca. 26° C, und bei einer Abgastemperatur von 40° C erreicht die Taupunktstemperatur 19° C.

Die Einbindung des H₂O verlauft also derart, daß die tatsächliche Taupunktstemperatur immer um einen Taupunktsabstand von ca. 20° C unter der jeweiligen Abgastemperatur bleibt. Auch bei Abkühlung der Abgase bis deutlich unter die Taupunktstemperatur bleiben die Abgase und die von ihnen berührten Wandungen stets trocken und frei von Kondensation. Ebenso führt auch der von den Abgasen mitgetragene Staub nirgendwo zu Anbackungen von feuchtem Staub an Wänden oder Wärmeübertragungsflächen.

Die Temperatur der Wärmeübertragungsflächen, mit deren Hilfe die Abgase abgekühlt werden, wird dabei zwischen der Temperatur der Abgase und der tatsächlichen Taupunktstemperatur gehalten. Der genannte Taupunktsabstand von ca. 20° C bietet hierfür hinreichenden Spielraum.

Die bei dieser Abkühlung eingebundenen Mengen an H₂O sind erheblich. Bei einer Absenkung des Taupunktes von beispielsweise 40° C auf 20° C werden 70 % des in den Abgasen enthaltenen H₂O eingebunden.

Geringere Abgastemperaturen als 35 - 40° C werden wirtschaftlich uninteressant, weil die Temperaturdifferenz zwischen Abgas und Kühlmedium oder Umgebung dann immer kleiner und der Heizflächenbedarf immer größer wird, wodurch wirtschaftliche Grenzen gesetzt sind.

Da das erfindungsgemäße Verfahren bewirkt, daß Abgas, Wärmeübertragungsflächen und anfallender Staub stets trocken bleiben, und da die korrosiven Komponenten des Abgases vollständig in den Staub eingebunden sind, bevor die Abgastemperatur sich der ursprünglichen Taupunktstemperatur nähert, ist die Anwendung des erfindungsgemäßen Verfahrens unproblematisch, sofern die vorgenannten Verfahrensbedingungen eingehalten bleiben.

Die vorgenannten Taupunktsabstände und Temperaturen gelten für den Fall, daß Ca oder andere Alkalien den wesentlichen Teil der Einbindung von H₂O und korrosiven Komponenten bewirken. Wenn die Gehalte an Ca und Alkalien für die Einbindung nicht ausreichen, reagieren die jeweils nächst wirksamen chemischen Komponenten des Staubes, wobei sich kleinere Taupunktsabstände ergeben können, die dann für die jeweils wirksamen chemischen Komponenten des Staubes kennzeichnend sind.

Verfahrenswesentlich ist die Erzielung der genannten Temperaturen sowie der Aufheizgeschwindigkeit der Staubteilchen während oder nach der Verbrennung. Die einschlägigen Lehrbücher der Feuerungstechnik geben Regeln zum Erzielen der gewünschten Aufheizgeschwindigkeiten bzw. Verweilzeiten. Meist ist den Lehrbüchern jedoch nicht von Verweilzeit, sondern von Feuerraumbelastung die Rede. Diese sind der Verweilzeit in bekannter Weise umgekehrt proportional. Besonders geeignet sind Kombinationen von Hochleistungsbrennern und zugehörigem Brennraum, häufig als Combustoren bezeichnet, sofern diese Geräte den praktischen Anforderungen der Kohlenstaubverbrennung gerecht werden.

Die Erfindung wird nachfolgend unter Bezugnahme auf die Zeichnungen noch detaillierter erläutert. Es zeigt:
- Fig. 1: im Längsschnitt schematisch einen Brenner zur Ausführung des Verfahrens, und
- Fig. 2: im Längsschnitt schematisch einen mit dem Brenner nach Fig. 1 befeuerten Warmwasserkessel zur Ausführung des Verfahrens.

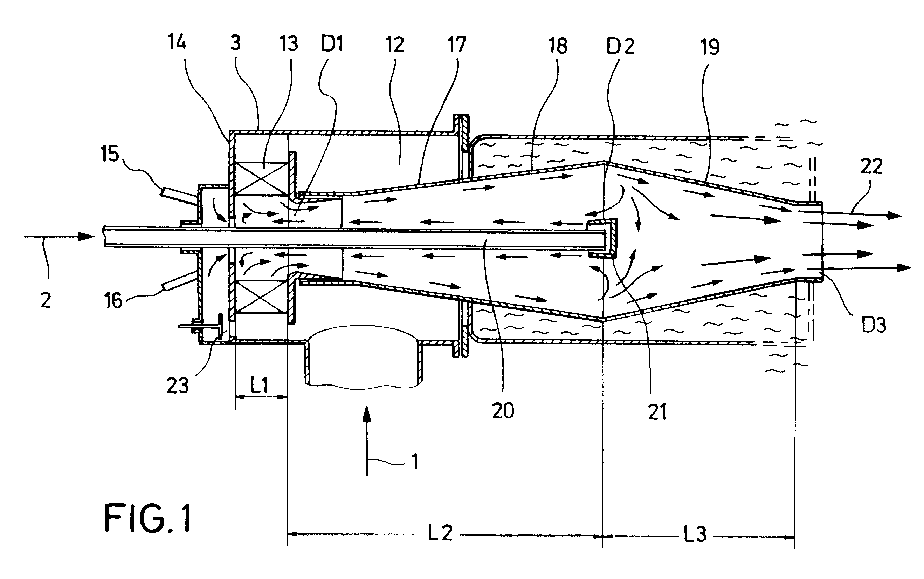

Gemäß Fig. 1 wird dem Brenner 3 Brennluft 1 sowie der von Trägerluft beförderte Kohlenstaub 2 in bekannter Weise zugeführt. Die Strömung der Brennluft 1 wird in einem Sammelraum 12 vergleichmäßigt und wird dann in einem radialen Schaufelgitter 13 in Drall versetzt. Mit diesem tritt die Brennluft 1 in eine divergente Brennermuffel 17 ein, die anschließend in einen wassergekühlten Teil 18 übergeht. An diesem schließt sich eine Flammbeschleunigungsdüse 19 an.

In der Brennermuffel ist eine Kohlenstaublanze 20 angeordnet, die an ihrem Ende eine Umlenkhaube 21 trägt und durch die Kohlenstaub in die sich in der Brennermuffel einstellende Rückströmung eingeführt wird.

Für eine Feuerungsleistung von 3,9 MW werden erfindungsgemäß die in Fig. 1 dargestellten Abmessungen wie folgt verwendet:
D1 = 338 mm ⌀
D2 = 700 mm ⌀
D3 = 350 mm ⌀
L1 = 197 mm
L2 = 1470 mm
L3 = 850 mm
Die Leitschaufeln 13 werden vorteilhaft nach einer logarithmischen Spirale geformt, mit einem Spiralwinkel gegen die Umfangsrichtung zwischen 6 und 12°, bevorzugt 8 - 10°.

Bei der Wahl dieser Abmessungen stellt sich in der Brennermuffel die in Fig. 1 gezielte Strömung ein, wobei nur die Durchsatzkomponenten gezeigt sind. Diese sind von einer Umfangskomponente derart überlagert, daß sich am Außenumfang ein Strömungswinkel von ca. 45° gegen die Mantellinie ergibt.

Bei Wahl der genannten Abmessungen werden zwei Gruppen von Ergebnissen erreicht:
a) Flammstabilität
   Es bildet sich eine wandnahe Durchsatzströmung vom Durchmesser D1 zum Durchmesser D2 aus. Hier kehrt etwa die Hälfte der Strömungsmenge radial nach innen um und läuft entlang der Kohlenstaublanze 20 durch den Querschnitt des Durchmessers D1 bis zum Bereich der Leitschaufeln 13 zurück.
   Hier kehrt sich diese Strömung wieder radial nach außen und strebt zusammen mit dem Frischluftdurchsatz dem Durchmesser D2 zu. Zwischen Durchsatz- und Rückströmung bildet sich eine Zone sehr intensiver Turbolenz aus, in der sich die Flamme stabilisiert.
   Der Kohlenstaub 2 wird zusammen mit einer vorzugsweise konstanten Trägerluftmenge eingeführt und mit Hilfe der Umlenkhaube 21 in die Rückströmung eingeblasen.
   Unter der Einstrahlung der umgebenen Flamme verdampfen die flüchtigen Komponenten des Kohlenstaubes und bilden mit der Brennluft 1 eine gasartige Flamme, die zusammen mit dem restlichen Kohlenstaub im Flammstrahl 22 ausbrennt. Dieser erreicht unter den angegebenen Bedingungen eine Geschwindigkeit von ca. 100 m/s, welche wesentlich ist für das Sauberhalten des nachgeschalteten Feuerraumes.
b) Emmissionen:
   Die angegebenen Abmessungen und Betriebsdaten ergeben Abgasemissionen deutlich unterhalb der Grenzwerte der TA-Luft.

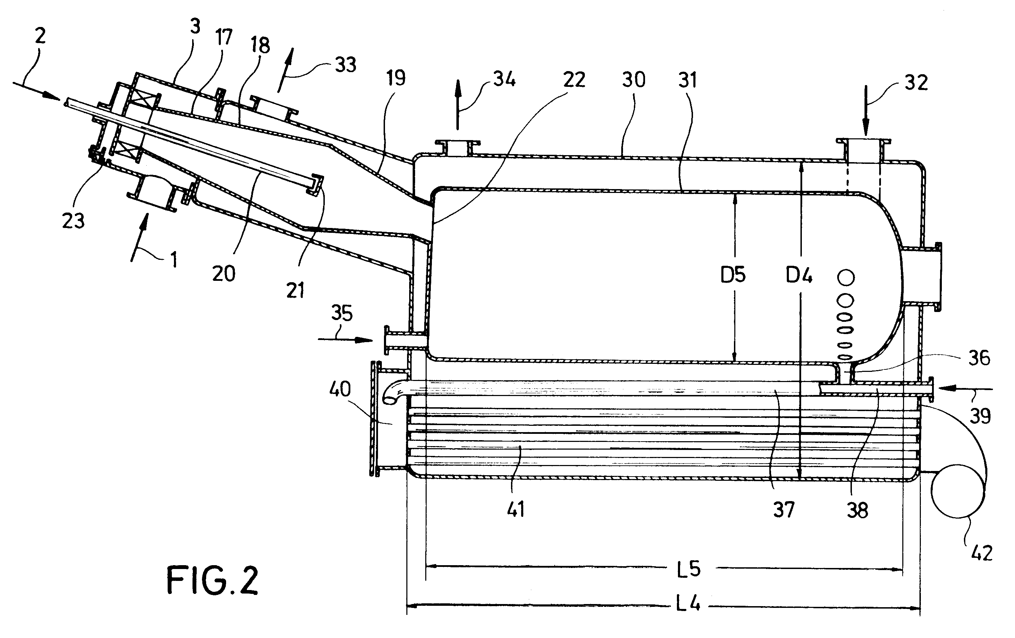

Fig. 2 zeigt einen für das erfindungsgemäße Verfahren besonders geeigneten Kessel, der im vorliegenden Fall als Warmwasserkessel dargestellt ist.

Der Kesselkörper 30 vom Durchmesser D4 und der Länge L4 enthält ein Flammrohr 31 vom Durchmesser D5 sowie einen Eintritt 32 für das kalte Rücklaufwasser und je einen Austritt 33 und 34 für das erwärmte Vorlaufwasser. Auf diese Weise ist die Wasserkühlung der in Fig. 1 dargestellten Brennermuffel sichergestellt. Diese ist im oberen Bereich der Stirnseite des Flammrohres 31 angeordnet und bläst ihren Flammstrahl schräg abwärts auf das andere Ende des Flammrohres, wo im unteren Bereich die Eintritte 36 in den ersten Rohrzug 37 angeordnet sind.

Unterhalb des Brenners ist mindestens eine Blasdüse 35 angeordnet, durch welche bis zu 15 % des Brennluftdurchsatzes in das Flammrohr eingeblasen werden können, um die Verbrennung zu unterstützen, sowie um Ascheablagerungen fortzublasen. Die Blasdüsen 35 können kombiniert werden mit Einblasevorrichtungen für Druckluft oder Dampf, falls Verunreinigungen im Kohlestaub zu Ablagerungen im Flammrohr führen.

Mit den vorgeschriebenen Maßnahmen gelingt es, das Flammrohr stets sauberzuhalten, was für das erfindungsgemäße Verfahren vorteilhaft ist, da auf diese Weise kontrollierbare Temperaturverhältnisse herrschen. Ablagerungen von Asche oder Schlacke im Flammrohr würden den Wärmeübergang behindern und die Temperaturen verändern.

Da die Verbrennung von Kohlenstaub sich bis in den ersten Rohrzug 37 hinein fortsetzt, ist es vorteilhaft, jedes einzelne Rohr dieses Rohrzuges mit Blasdüsen 38 zu versehen, durch welche eine Zusatzluftmenge 39 von bis zu 15 % der Verbrennungsluftmenge in die Rohre des Rohrzuges 37 eingeblasen werden können. Diese Luftstrahlen sorgen ebenfalls für Sauberhaltung des Eintrittsbereiches in den ersten Rohrzug 37.

Fur die angegebene Kesselleistung von 3,5 MW entsprechend einer Feuerungsleistung von 3,9 MW ist es für das erfindungsgemäße Verfahren weiterhin vorteilhaft, für den ersten Rohrzug 37 insgesamt 25 Rohre vom Durchmesser 88,9 x 5 mm vorzusehen. Dieses ergibt hinreichende Geschwindigkeiten, um auch beim Herabregeln der Leistung die Ablagerungen von Asche in den Rohren des ersten Rohrzuges 37 zu vermeiden. Andererseits sind die Geschwindigkeiten noch nicht so hoch, daß sich im oberen Lastbereich des Kessels dynamische Effekte aus dem Zusammenwirken der Gasmasse in den Rohren mit der Elastizität des Gasvolumens im Flammrohr 31 einstellen würden. - Bei Unterschreitung einer hinreichenden Transportgeschwindigkeit der Abgase in den Rohren des ersten Rohrzuges 37 würden sich in den Rohren Ascheablagerungen bilden, die sich dünenähnlich durch die Rohre bewegen und jedesmal beim Eintreffen am Rohrende zu einem Druckstoß führen, wodurch die genaue Einstellung der Brennluftmenge erschwert wird.

Durch die vorgenannte Dimensionierung der Rohre des ersten Rohrzuges erfolgt nur eine begrenzte Abkühlung der Abgase auf ca. 500° C, wodurch die in diesem Rohrzug noch laufenden Verbrennungsreaktionen hinreichend Zeit und Temperaturniveau haben, zu Ende zu laufen. Sich hieraus ergebende Ascheeigenschaften sind für das erfindungsgemäße Verfahren vorteilhaft.

In der vorderen Umlenkkammer 40 werden die auf ca. 500° C abgekühlten Abgase den Rohren 41 des zweiten Rohrzuges zugeführt, in denen sie je nach Kessellast und Wassertemperatur im unteren Bereich des Kessels auf Temperaturen von 110 bis 150° C abgekühlt werden.

Mit Rücksicht auf die vorbeschriebenen Bedingungen, nämlich Aschetransport einerseits und Vermeidung dynamischer Effekte anderseits, ist es für das erfindungsgemäße Verfahren vorteilhaft, im zweiten Rohrzug 288 Rohre vom Durchmesser 30 x 3,5 mm vorzusehen.

Die aus den Rohren 41 austretenden abgekühlten Abgase werden einem Abgasrohr 42 zugeleitet. Dieses wird vorteilhafterweise quer zur Kesselachse angeordnet, wobei ihm die Abgase tangential zugeführt werden. Auf diese Weise wird erreicht, daß über die gesamte Länge des Abgasrohres 42 nirgendwo Totwasserzonen entstehen, die zu einer Ablagerung von Asche führen können.

Die gesamte in Fig. 2 dargestellte Anordnung mit Brenner, Flammrohr, den einzelnen Rohrzügen und dem Abgasrohr ist damit selbstreinigend und hält sich im Betrieb vollkommen sauber. Dieses ist für das erfindungsgemäße Verfahren von großem Vorteil, da sich auf diese Weise die gesamte Asche im Abgas befindet und von reproduzierbarer Beschaffenheit ist.

Die in Fig. 2 dargestellte Vorrichtung ist mit gleicher Leistung und praktisch gleichem Wirkungsgrad auch für die Verfeuerung anderer staubförmiger Brennstoffe wie Steinkohle, Holzkohle etc. geeignet, ebenso für die Verbrennung von flüssigen und gasförmigen Brennstoffen.

Für die Anwendung dem erfindungsgemäßen Verfahrens auf die Entschwefelung der Abgase bespielsweise flüssiger Brennstoffe sind in bekannter Weise Absorbentien in die Brennermuffel einzublasen, beispielsweise Kalksteinmehl, wobei sich deren Menge und Aufbereitung nach den bekannten einschlägigen Regeln der Technik richtet.

Eine bemerkenswerte Eigenschaft der in Fig. 2 dagestellen Vorrichtung, insbesondere der Brennermuffel und des Flammrohres, ist, daß die Strömungsverhältnis darin von der Reynolds-Zahl in der ersten Näherung unabhängig sind. Das bedeutet, daß bei Umrechnung auf andere Feuerungsleistungen die Abmessungen von Muffel und Flammrohr mit der Wurzel aus dem Leistungsverhältnis umzurechnen sind. Dabei ist zu berücksichtigen, daß Brennersysteme nach Fig. 1 keine obere Leistungsgrenze haben; diese ist vielmehr gegeben durch die Aufbereitung und Reaktionswilligkeit des jeweiligen Brennstoffes. Mit steigender Leistung können daher in bekannter Weise höhere Flammgeschwindigkeiten gewählt werden, wodurch bei Umrechnung auf höhere Leistung die Apparate etwas kleiner werden, als es der Umrechnungsregel mit der Wurzel aus den Leistungsverhältnis entspricht. Diese Berücksichtigung entspricht dem Stand der Technik.

Der erste Rohrzug 37 und der zweite Rohrzug 41 arbeiten in Bereichen der Reynolds-Zahlen, in denen der Temperaturabbau wesentlich nur eine Funktion des Verhältnisses der Länge zum Innendurchmesser der jeweiligen Rohre ist. Wenn man bei Umrechnung auf andere Leistungen gleicher Abgastemperaturen am Austritt aus dem Kessel erzielen will, wird in bekannter Weise die Summe der Rohrquerschnitte entsprechend dem Leistungsverhältnis umgerechnet, wobei die Summe der Verhältnisse von Rohrlänge zu Innendurchmesser konstant bleibt. Damit sind Abmessung und Anfall der Rohre des jeweiligen Rohrzuges nach den Regeln der Strömungstechnik eindeutig definiert. Weitere Bemessungsangaben sind hierfür nicht erforderlich.

Wenn die in Fig. 2 beschriebene Vorrichtung zugleich auch die anderen Grenzwerte der TA-Luft inbesondere hinsicht NOx und CO erfüllen soll, ist es vorteilhaft, für den Durchmesser D5 des Flammrohres 31 sowie seine Länge L5 folgende Werte zu wählen;
D5 = 1400 mm ⌀
L5 = 3850 mm
Daraus ergibt sich dann ein Durchmesser des Kessels 30 von D4 = 2600 mm und eine Länge des Kessels von L4 = 4100 mm.

Dem Kessel nachgeschaltet wird ein Kühler zur weiteren Abkühlung der Abgase auf die für die jeweilige Einbindung gewünschte Abgastemperatur. Hierfür können Wärmetauscher beliebiger Bauart verwendet werden, sofern die vorgenannten Verfahrensbedingungen eingehalten werden. Besonders günstig ist ein Röhrenkühler mit geraden Rohren, wobei die Abgase durch die Rohre strömen, während sich das Kühlmedium, bespielsweise Wasser, ausserhalb der Rohre befindet. Dazu werden 225 Rohre von 23 mm Innendurchmesser und 2800 mm Länge verwendet, wobei die Temperatur des Kühlmediums nach den vorgenannten Verfahrensbedindungen gesteuert wird, so daß die Temperatur der inneren Rohroberfläche stets zwischen der jeweiligen örtlichen Abgastemperatur und der daraus resultierenden wahren Taupunktstemperatur liegt.

Da die entstehenden Kristalle sehr oberflächenaktiv sind und zur Ablagerung auf den Kühlflächen neigen, ist erfindungsgemäß vorgesehen, die Kühlflächen automatisch abzureinigen, beispielsweise durch Druckstöße oder mit mechanischen Reinigungseinrichtungen (nicht dargestellt).

Anschließend werden Staub und Abgase in bekannter Weise voreinander getrennt, beispielsweise durch Gewebefilter. Auch hier werden alle vom Staub berührten Oberflächen bis zur Trennung des Staubes von den Abgasen auf einer Temperatur oberhalb der wahren Taupunktstemperatur gehalten. Nach Abtrennung des Staubes von den Abgasen ist der weitere Verlauf des Abgastemperatur nicht mehr kritisch, da die korrosiven Abgaskomponenten ja bereits eingebunden sind.

Sollen bespielsweise bereits vorhandene Kamine mit Abgasen aus dem erfindungsgemäßen Verfahren beaufschlagt werden, könnten in den Kaminen die Abgasgeschwindigkeiten nicht mehr ausreichen, da die Abgastemperaturen jetzt niedriger sind als früher. Dem kann dadurch abgeholfen werden, daß beispielsweise warmes Wasser aus dem dem Kessel nachgeschalteten Abgaskühler in luftgekühlten Wärmetauschern zugeführt wird, wobei ein Teil der dabei anfallenden Warmluft den Abgasen des erfindungsgemäßen Verfahrens beigemischt wird. Hierdurch erhielt man nicht nur eine hinreichende Geschwindigkeit in dem vorhandenen Kamin, sondern man vermeidet auch Feuchtigkeitsniederschläge in denselben, beispielsweise beim Anfahren aus dem kalten Zustand.

Für die Erzielung des erfindungsgemäßen Ergebnisses der Einbindung von Kristallwasser und korrosiven Komponenten der Verbrennungsabgase ist es nicht unumgänglich erforderlich, daß die Aufbereitung und Aktivierung der wirksamen Komponenten des Staubes, also bespielsweise die Zersetzung von Ca(OH)₂ oder CaCO₃ zu CaO in demjenigen Verbrennungsprozeß stattfindet, dem die vorgenannten Verbrennungsabgase entstammen. Die Zersetzung und Aufbereitung der aktiven Komponenten des Staubes kann auch anderen Orts erfolgen, beispielsweise in einer geeigneten Kalkbrenneinrichtung in der das vorbeschriebene Erhitzungs-Verfahren ausgeführt wird. Das im Falle dieses Beispieles erzeugte hoch aktive CaO, muß den Verbrennungsabgasen erfindungsgemäß bei einer höheren Temperatur als derjenigen beigemischt werden, bei der die Einbindung von Kristallwasser und Schadstoffkomponenten beginnt. Dazu kann entweder das CaO entsprechend voraufgeheizt sein oder die Verbrennungsabgase sind entsprechend heiß, um das CaO nach dem Beimischen entsprechend schnell zu erhitzen. Entscheidend ist, daß das als Beispiel angeführte CaO gemeinsam mit den Abgasen bis unter die Einbindungstemperatur abgekühlt wird. Ist das genannte CaO den Abgasen erst bei einer geringeren Temperatur als derjenigen, bei der die Einbindung beginnt, beigemischt worden, so tritt der erfindungsgemäße Effekt in verschlechtertem Umfang ein. Insbesondere verzögert sich dann die Einbindung. Das CaO wird schlechter ausgenutzt, und H₂O sowie die korrosiven Gaskomponenten werden nur teilweise eingebunden, siehe DE 32 40 373 A1 und DE 33 32 928 C2. Die Tatsache, daß es hier nur zu einer teilweisen Einbindung von H₂O und korrosiven Gaskomponenten kommt, ist wesentlich darin begründet, daß die erfindungswesentliche Aufbereitung des CaO hier noch nicht bekannt war. Wenn aber im Abgas noch Reste korrosiver Komponenten vorhanden sind, wenn auch in reduziertem Umfang, so bleibt doch die damit verbundene Korrosion der kaltgehenden Anlagenteile erhalten, nur daß die Korrosion gegenüber dem ursprünglichen vollen Schadstoffgehalt langsamer voranschreitet. Erst durch das erfindungsgemäße Verfahren ermöglichte vollständige und restlose Einbindung der korrosiven Komponenten erlaubt die gefahrlose Abkühlung der Verbrennungsabgase auf eine Temperatur unterhalb der genannten Einbindungstemperatur, insbesondere also auf den Temperaturbereich unterhalb 50° C.

## Patentansprüche

1. Verfahren zur Wärmeausnutzung von staub- oder aschehaltigen Verbrennungsabgasen, gekennzeichnet durch folgende Schritte:
a) Aufheizen wenigstens einer die aktive Komponente des Staubes enthaltenden Verbindung, wie beispielsweise Ca(OH)₂, CaCO₃ oder MgCO₃, innerhalb von weniger als 0,5 s, gerechnet vom Ende der Verdampfung eventuell vorhandener Oberflächenfeuchtigkeit, auf eine um wenigstens 10° C über deren jeweiliger Zersetzungs-Gleichgewichtstemperatur liegenden Temperatur, die jedoch unter jener liegt, bei der die aktive Komponente geschmolzen oder inaktiv, insbesondere totgebrannt, wird, und
b) anschließende Abkühlung innerhalb einer Zeitdauer von weniger als 10 s, gerechnet vom Beginn des Aufheizvorgangs der Staubteilchen, auf eine weniger als 30° C über der ursprünglichen Taupunktstemperatur, die sich aus Verbrennungswasserdampf sowie dem Wassergehalt von Brennstoff, Verbrennungsluft und Staub ergibt, liegende Temperatur, währenddessen die aktive Komponente Kristallwasser bilden und korrodierende Schadstoffe in die Kristalle einbrinden kann.

2. Verfahren nach Anspruch 1, bei dem die die aktive Komponente des Staubes enthaltende Verbindung auf eine um 50° C über der Zersetzungs-Gleichgewichtstemperatur liegende Temperatur aufgeheizt wird.

3. Verfahren nach Anspruch 1 oder 2, bei dem die Abkühlung auf eine weniger als 10° C über der urspünglichen Taupunktstemperatur liegende Temperatur erfolgt.

4. Verfahren nach einem der Ansprüche 1 bis 3, bei dem, die Abkühlung in weniger als 5 s erfolgt.

5. Verfahren nach einem der vorhergehenden Ansprüche, bei dem die staubhaltigen Verbrennungsabgase durch Verbrennung eines aschehaltigen Brennstoffs entstehen.

6. Verfahren nach einem der vorhergehenden Ansprüche, bei dem die staubhaltigen Verbrennungsabgase dadurch entstehen, daß dem Brennstoff vor der Verbrennung aktive staubförmige Komponenten enthaltende Ausgangsstoffe, wie Ca(OH)₂, CaCO₃, MgCO₃, zugesetzt werden.

7. Verfahren nach einem der vorhergehenden Ansprüche, dadurch gekennzeichnet, daß die aktiven Komponenten des Staubes gesondert hergestellt und den Verbrennungsabgasen bei einer Temperatur demselben beigemischt werden, die oberhalb jener liegt, bei der die Einbindung von H₂O und korrosiver Komponenten in die Staubteilchen beginnt, und anschließend die Abkühlung durchgeführt wird.

8. Verfahren nach einem der vorhergehenden Ansprüche, bei dem während des Abkühlvorgangs der Staub unter ständiger turbulenter Durchmischung von den abkühlenden Verbrennungsabgasen getragen wird.

9. Verfahren nach einem der vorhergehenden Ansprüche, bei dem die Staubmenge während des Abkühlvorgangs mit den Verbrennungsabgasen vermischt bleibt und erst nach Vollendung des Abkühlvorgangs von den Verbrennungsabgasen getrennt wird.

10. Verfahren nach einem der vorhergehenden Ansprüche, bei dem die Abkühlung der den Staub tragenden Verbrennungsabgasen durch Kühlflächen bewirkt wird, deren Temperatur zwischen der jeweiligen örtlichen Abgastemperatur und der jeweiligen örtlichen tatsächlichen Taupunktstemperatur liegt.

11. Verfahren nach einem der vorhergehenden Ansprüche, bei dem wenigstens die Ausgangsstoffe der aktiven Komponenten in einen Combustor oder eine Brennermuffel eingeführt werden, in dem bzw. der wenigstens ein Teil der zur Erzeugung der Verbrennungsabgase dienenden Verbrennung stattfindet.

12. Verfahren nach Anspruch 11, bei dem die restliche Verbrennung nach dem Combustor oder der Brennermuffel in einem befeuerten Raum stattfindet, in dem sich wärmeaufnehmende Oberflächen befinden.

13. Verfahren nach Anspruch 12, bei dem die Verbrennungsabgase den Feuerungsraum und die Züge eines Kessels durchströmen und sich dabei abkühlen.

14. Verfahren nach einem der vorhergehenden Ansprüche, dadurch gekennzeichnet, daß dem befeuerten Objekt ein Kühler nachgeschaltet ist, der die Abgase auf die Endtemperatur der Abkühlung herunterkühlt.

15. Verfahren nach Anspruch 14, dadurch gekennzeichnet, daß die wärmeaufnehmenden Oberflächen des Kühlers mechanisch von abgelagerten Staub gereinigt werden.

16. Vorrichtung zur Durchführung des Verfahrens nach Anspruch 1, enthaltend in Kombination:
a) eine divergente Brennermuffel (17) mit einer eintrittsseitig daran angesetzten Drallkammer (3) mit darin angeordnetem Schaufelgitter (13) und einer sich austrittsseitig an die Brennermuffel (17) anschließenden konvergenten Beschleunigungsdüse (18), mit folgenden, auf eine Feuerungsleistung von 3,9 MW bezogenen Abmessungen:
| | |
|---|---|
| Eintrittsdurchmesser D1 der Brennermuffel (17): | 338 mm |
| Austrittsdurchmesser D2 der Brennermuffel (17): | 700 mm |
| Austrittsdurchmesser D3 der Beschleunigungsdüse (18): | 350 mm |
| Axiale Länge L1 der Drallkammer (3): | 197 mm |
| Länge L2 der Brennermuffel (17): | 1470 mm |
| Länge L3 der Beschleunigungsdüse (18): | 850 mm, |
b) einen Flammrohrkessel (30) mit einer Leistung von 3,5 MW und nachgeschaltetem Kühler, der bezogen auf die angegebene Leistung 225 Rohre (41) von je 23 mm Innendurchmesser und 280°mm Länge aufweist, die von den Verbrennungsabgasen durchströmt werden, und
c) eine Einrichtung (30, 32, 33) zum Einstellen der Rohre auf eine Innenwandtemperatur, die unterhalb der jeweiligen örtlichen Temperatur der Verbrennungsabgase, aber oberhalb der jeweils örtlich tatsächlich vorhandenen Taupunkttemperatur liegt,
wobei für andere Feuerungsleistungen als die angegebenen 3,9 MW die angegebenen Abmessungen mit der Wurzel aus dem Verhältnis der anderen Leistung zu 3,9 MW multipliziert sind.

## Claims

1. A method for the utilization of heat of flue gases containing dust or ashes, comprising the steps of:
a) heating at least one of the compounds containing the active component of the dust, such as e.g. Ca(OH)₂, CaCO₃ or MgCO₃, within less than 0.5 seconds, counted from the end of evaporization of possibly present surface moisture, to a temperature at least 10° above the respective decomposition equilibrium temperature, which, however, is below the temperature at which the active component is molten or becomes inactive, especially is overburned, and
b) subsequent cooling within a duration of less than ten seconds, counted from the beginning of the heating process of the dust particles, to a temperature of less than 30° C above the original dew point temperature, which results from the combustion water vapor as well as from the water content of fuel, combustion air and dust, during which the active component can produce crystal water and can bind corroding noxious matter into the crystals.

2. A method according to claim 1, in which the compound containing the active component of the dust is heated to a temperature 50° C above the decomposition equilibrium temperature.

3. A method according to one of claims 1 or 2, in which the cooling takes place at a temperature above which is 10° C above the original temperature.

4. A method according to one of claims 1 to 3, in which cooling takes place in less than 5 seconds.

5. A method according to one of the preceding claims, in which the dust-containing flue gases evolve by combusting an ash-containing fuel.

6. A method according to one of the preceding claims, in which the dust-containing flue gases evolve in that starting materials, containing active dust-like components, such as Ca(OH)₂, CaCO₃, MgCO₃, are added to the fuel before the combustion.

7. A method according to one of the preceding claims, characterized in that the active components of the dust are produced separately and are added to the flue gases at a temperature of the same which is above the temperature at which the bonding of H₂O and corrosive components into the dust particles starts, and afterwards the cooling process is performed.

8. A method according to one of the preceding claims, in which during the cooling process the dust is carried by the cooling flue gases during permanent turbulent mixing.

9. A method according to one of the preceding claims, in which the amount of dust is mixed with the flue gases during the cooling process and is separated from the flue gases after completion of the cooling process.

10. A method according to one of the preceding claims, in which the cooling of the flue gases carrying the dust is effected by cooling surfaces, the temperature of which being between the respective local flue gas temperature and the respective local actual dew point temperature.

11. A method according to one of the preceding claims, in which at least the starting materials of the active components are introduced into a combustor or into a burner muffle, in which at least a part of the combustion serving for producing the flue gases takes place.

12. A method according to claim 11, in which the residual combustion takes place downstream of the combustor or the burner muffle in a heated chamber in which heat receptive surfaces are located.

13. A method according to claim 12, in which the flue gases flow through the firing chamber and through passes of a boiler and thereby cool down.

14. A method according to one of the preceding claims, characterized in that a cooler is connected to the heated object, which cools the flue gases to the final temperature of the cooling process.

15. A method according to claim 14, characterized in that the heat receptive surfaces of the cooler are cleaned mechanically from deposited dust.

16. A device for performing the method according to claim 1, including in combination:
a) a divergent burner muffle (17) having a spin chamber (3) mounted to the inlet thereof and including a blade row (13) disposed therein and a convergent acceleration nozzle (18), connected to the outlet of the burner muffle (17), having the following dimensions referred to a firing capacity of 3.9 MW:
| | |
|---|---|
| inlet diameter D1 of the burner muffle (17): | 338 mm |
| outlet diameter D2 of the burner muffle (17): | 700 mm |
| outlet diameter D3 of the acceleration nozzle (18) | 350 mm |
| axial length L1 of the spin chamber | 197 mm |
| length L2 of the burner muffle (17): | 1470 mm |
| length L3 of the acceleration nozzle (18): | 850 mm, |
b) a flame tube boiler (30) having a capacity of 3.5 MW and a cooler connected thereto, which with regard to the defined capacity comprises 225 tubes (41) each having an inner diameter of 23 mm and a length of 280 mm, through which the flue gases flow, and
c) means (30, 32, 33) for adjusting the tubes to an inner wall temperature which is below the respective local temperature of the flue gases, but above the locally actually existing dew point temperature,
wherein for firing capacities other than the defined 3.9 MW, the defined dimensions are multiplied with the root from the ratio of the other capacity to said 3.9 MW.

## Revendications

1. Procédé permettant la récupération de chaleur à partir de fumées de combustion contenant des poussières ou des cendres, caractérisé par les étapes suivantes :
a) élévation de température d'au moins un composé contenant le composant actif des poussières, tel que par exemple Ca(OH)₂, CaCO₃ ou MgCO₃, en moins de 0,5 s, calculé à partir de la fin de la vaporisation d'une humidité superficielle éventuellement présente, jusqu'à une température qui est supérieure d'au moins 10°C à la température d'équilibre de décomposition correspondante, mais qui est toutefois inférieure à la température à laquelle le composant actif fond ou devient inactif, notamment en faisant l'objet d'une surcuisson, et
b) à la suite, un refroidissement s'étendant sur un intervalle de temps inférieur à 10 s, calculé à partir du début de l'opération d'élévation de température des particules de poussières, jusqu'à une temperature supérieure de moins de 30°C à la température de point de rosée initiale qui résulte de la vapeur d'eau de combustion, ainsi que de la teneur en eau du combustible, de l'air de combustion et des poussières, tandis que le composant actif peut former de l'eau de cristallisation et fixer les matières nocives corrosives dans les cristaux.

2. Procédé selon la revendication 1, selon lequel la température du composé contenant le composant actif des poussières est élevée à une valeur supérieure de 50°C à la température d'équilibre de décomposition.

3. Procédé selon la revendication 1 ou 2, selon lequel le refroidissement a lieu jusqu'à une température supérieure de moins de 10°C à la température de point de rosée initiale.

4. Procédé selon l'une des revendications 1 à 3, selon lequel le refroidissement a lieu en moins de 5 s.

5. Procédé selon l'une des revendications précédentes, selon lequel les fumées de combustion contenant des poussières proviennent de la combustion d'un combustible contenant des cendres.

6. Procédé selon l'une des revendications précédentes, selon lequel les fumées de combustion contenant des poussières sont obtenues par addition au combustible, préalablement à la combustion, de matières premières contenant des composants actifs se présentant sous forme de poussières, telles que Ca(OH₂), CaCO₃, MgCO₃.

7. Procédé selon l'une des revendications précédentes, caractérisé en ce que les composants actifs des poussières sont produits d'une manière séparée et sont mélangés aux fumées de combustion à une température de ces dernières qui est supérieure à celle à laquelle commence la fixation d'H₂O et des composants corrosifs dans les particules de poussières, à la suite de quoi le refroidissement est effectué.

8. Procédé selon l'une des revendications précédentes, selon lequel, pendant l'opération de refroidissement, les poussières sont transportées en étant soumises à un mélange turbulent continu de la part des fumées de combustion à refroidir.

9. Procédé selon l'une des revendications précédentes, selon lequel la quantité de poussières reste mélangée aux fumées de combustion pendant l'opération de refroidissement et n'est séparée des fumées de combustion qu'après l'achèvement de l'opération de refroidissement.

10. Procédé selon l'une des revendications précédentes, selon lequel le refroidissement des fumées de combustion transportant les poussières est effectué au moyen de surfaces de refroidissement dont la température est comprise entre la température locale des fumées à l'endroit considéré et la température de point de rosée réelle locale en cet endroit.

11. Procédé selon l'une des revendications précédentes, selon lequel au moins les matières premières des composants actifs sont introduites dans une chambre de combustion à deux étages ou dans un moufle de combustion dans laquelle ou lequel a lieu au moins une partie de la combustion servant à la production des fumées de combustion.

12. Procédé selon la revendication 11, selon lequel le reste de la combustion, en aval de la chambre de combustion à deux étages ou du moufle de brûleur, a lieu dans un volume à combustion alimentée dans lequel se trouvent des surfaces d'absorption de chaleur.

13. Procédé selon la revendication 12, selon lequel les gaz de combustion traversent le foyer et les faisceaux d'une chaudière et se refroidissent à cette occasion.

14. Procédé selon l'une des revendications précédentes, caractérisé en ce qu'en aval de l'élément à combustion alimentée, il est disposé un appareil de refroidissement qui refroidit les fumées jusqu'à la température finale du refroidissement.

15. Procédé selon la revendication 14, caractérisé en ce que les surfaces d'absorption de chaleur de l'appareil de refroidissement sont nettoyées des poussières déposées, par voie mécanique.

16. Installation de mise en oeuvre du procédé selon la revendication 1, comprenant, en combinaison :
a) un moufle à brûleur (17), de forme divergente, comprenant, disposée dans celui-ci du côté de son entrée, une chambre de mise en mouvement rotationnel (3) dans laquelle une grille à ailettes (13) est disposée, et, se raccordant au moufle à brûleur (17) du côté de sa sortie, une buse d'accélération (18) de forme convergente, avec les dimensions qui suivent, rapportées à une puissance de chauffe de 3,9 MW :
| | |
|---|---|
| Diamètre d'entrée D1 du moufle à brûleur (17) : | 338 mm |
| Diamètre de sortie D2 du moufle à brûleur (17) : | 700 mm |
| Diamètre de sortie D3 de la buse d'accélération (18) : | 350 mm |
| Longueur axiale L1 de la chambre de mise en mouvement rotationnel (3) : | 197 mm |
| Longueur L2 du moufle à brûleur (17) : | 1470 mm |
| Longueur L3 de la buse d'accélération (18) : | 850 mm |
b) une chaudière (30) à tube-foyer, d'une puissance égale à 3,5 MW, et, disposé en aval, un appareil de refroidissement qui, rapporté à la puissance indiquée, comprend 225 tubes (41) qui ont chacun un diamètre intérieur égal à 23 mm et une longueur égale à 2800 mm et que les fumées de combustion traversent et
c) un dispositif (30, 32, 33) permettant de régler les tubes à une température de paroi intérieure qui est inférieure à la température locale des fumées de combustion à l'endroit considéré, mais supérieure à la température de point de rosée locale se présentant réellement en cet endroit,
tandis que, pour des puissances de chauffe différentes de la puissance indiquée, égale à 3,9 MW, les dimensions indiquées sont multipliées par le cube du rapport de la puissance différente à 3,9 MW.
